Europäisches Patentamt

European Patent Office

Office européen des brevets

(11) Veröffentlichungsnummer: **0 318 723**
**A2**

(12) **EUROPÄISCHE PATENTANMELDUNG**

(21) Anmeldenummer: 88118475.8

(22) Anmeldetag: 05.11.88

(51) Int. Cl.⁴: **A01F 25/18**

(30) Priorität: 02.12.87 DE 3740761
09.03.88 DE 3807738

(43) Veröffentlichungstag der Anmeldung:
07.06.89 Patentblatt 89/23

(84) Benannte Vertragsstaaten:
AT BE CH DE ES FR GB IT LI NL SE

(71) Anmelder: **von der Heide, Hans**
**Ibbenbürener Strasse 17**
**D-4530 Ibbenbüren 2- Laggenbeck(DE)**

(72) Erfinder: **von der Heide, Hans**
**Ibbenbürener Strasse 17**
**D-4530 Ibbenbüren 2- Laggenbeck(DE)**

(74) Vertreter: **Patentanwälte Schulze Horn und**
**Hoffmeister**
**Goldstrasse 36**
**D-4400 Münster(DE)**

(54) **Vorrichtung zum Aufnehmen, Transportieren, Zerkleinern und Ausbringen von Futtermittelblöcken.**

(57) Bekannte Vorrichtungen der unter 1. genannten Art sind kompliziert und voluminös aufgebaut und damit teuer und nur für große landwirtschaftliche Betriebe rentabel. Die neue Vorrichtung soll einfacher und kompakter aufgebaut sowie kostengünstiger sein.

Die neue Vorrichtung (1) besteht im wesentlichen aus einem Behälter (2) mit einer verschwenkbaren Ladeplattform (4) zum Einladen eines Futtermittelblockes und mit einer seitlich am Behälter (2)-angeordneten, schräg nach oben und außen verlaufenden Fräskettenanordnung (3) zum Zerkleinern und Ausbringen des Futtermittels. Die neue Vorrichtung ist sehr kompakt aufgebaut und nur wenig größer als ein Futtermittelblock. Außerdem kann sie als Anbaugerät für einen Traktor ausgebildet sein.

Die neue Vorrichtung eignet sich für alle landwirtschaftlichen Betriebe, in denen Futtermittel aus Futtermittelblöcken verfüttert wird, wobei die Vorrichtung auch für kleinere Betriebe rentabel einsetzbar ist.

## Vorrichtung zum Aufnehmen, Transportieren, Zerkleinern und Ausbringen von Futtermittelblöcken

Die Erfindung betrifft eine Vorrichtung zum Aufnehmen, Transportieren, Zerkleinern und Ausbringen von Futtermittelblöcken, insbesondere Silage, Biertreber und/oder Corn Cob Mix, mit einem an seiner einen Stirnseite offenen Behälter, mit einer Ladeeinrichtung zum Einladen eines Futtermittelblocks in den Behälter, mit am Behälterboden angeordneten, quer zur Längsrichtung der Vorrichtung laufenden Fördermitteln und mit Mitteln zum Zerkleinern und seitlichen Ausbringen des Futtermittelblocks.

Eine Vorrichtung der genannten Art ist aus der veröffentlichten europäischen Patentanmeldung 0 035 435 bekannt. Bei dieser Vorrichtung besteht die Ladeeinrichtung aus einem in einer vertikalen Ebene verschwenkbaren Teleskoparm, an dessen freiem Ende ein Zinkenrost zur Aufnahme eines Futtermittelblocks hängend angeordnet ist. Zusätzlich trägt der Arm noch eine Schneidvorrichtung zum Ausschneiden von Blöcken. Nach dem Einführen eines Blocks in den Behälter von dessen offener Stirnseite her kommt der Zinkenrost durch Absenken zwischen längs auf dem Behälterboden verlaufende Stege vom Block frei und wird unter dem Block herausgezogen. Nach einem Anheben und erneutem Ausfahren mit anschließendem Absenken wird der Zinkenrost an die andere Seite des Blocks gebracht. Danach kann der Block mittels Einfahrens des Teleskoparms innerhalb des Behälters verschoben und auf die am geschlossenen Ende des Behälters angeordneten bodenseitigen Kratz- und Fördermittel gebracht werden. Die Kratz- und Fördermittel bestehen hier aus einem Querförderband mit erhabenen Kratzstegen und aus einer drehkreuzartigen Lockerungsvorrichtung.

Nachteilig ist bei der bekannten Vorrichtung, daß sie aufwendig aufgebaut ist und einen komplizierten Bewegungsablauf aufweist. Zudem ist sie durch ihre große Baulänge sehr sperrig und damit nicht freizügig verwendbar. Die Vorrichtung ist außerdem kostspielig und deshalb nur für große landwirtschaftliche Betriebe interessant. Bei langfaserigem Silagegut, z. B. Grassilage, kann es zu einem Aufwickeln von Silagegut auf der drehkreuzartigen Lockerungsvorrichtung kommen, so daß eine zuverlässige Funktion der Vorrichtung nicht gewährleistet ist.

Es stellt sich daher die Aufgabe, eine Vorrichtung der eingangs genannten Art zu schaffen, die einfach und kompakt aufgebaut ist, die betriebssicher ist und die kostengünstig herstellbar und einsetzbar ist.

Die Lösung dieser Aufgabe gelingt erfindungsgemäß durch eine Vorrichtung der eingangs genannten Art, welche dadurch gekennzeichnet ist,
daß die Ladeeinrichtung eine Plattform ist, die um eine behälterbodennahe, horizontale, der offenen Stirnseite benachbarte Achse aus einer flachen, annähernd horizontalen Lage zum Unterfahren und Aufnehmen eines Futtermittelblocks mit diesem unter Einkippen des Blocks in den Behälter in eine im wesentlichen vertikale, den Behälter stirnseitig verschließende Lage sowie in umgekehrter Richtung verschwenkbar ist, und daß die Mittel zum Zerkleinern und Ausbringen aus mindestens einer seitlich am Behälter angeordneten, schräg nach oben und außen verlaufenden Fräskettenanordnung bestehen.

Die Vorrichtung gemäß Erfindung besteht damit aus einfachen und robusten Bauelementen, die eine kostengünstige Herstellbarkeit und einen störungs- und wartungsarmen Betrieb auch bei schwierigem Silagegut gewährleisten. Die Ketten können problemlos ausreichend stark dimensioniert werden und außerdem im Fall eines Schadens leicht ausgewechselt werden. Durch das Einschwenken der Ladeplattform wird der erforderliche Platzbedarf für die Vorrichtung während des Ausbringens des Futtermittels in einer Stallung sehr klein; die Baugröße der Vorrichtung überschreitet nur wenig das Maß eines aufgenommenen Futtermittelblocks. Zudem wird der Futtermittelblock durch das Einkippen in den Behälter wirksam vorgelockert, was die folgende Zerkleinerung wesentlich erleichtert.

Zur weiteren Verminderung des Platzbedarfs der Vorrichtung ist vorgesehen, daß die Fräskettenanordnung um eine in ihrem unteren Teil in Längsrichtung der Vorrichtung verlaufende Achse aus ihrer schräg nach oben und außen verlaufenden Arbeitsstellung in eine im wesentlichen vertikale Ruhestellung einschwenkbar ist. Die Vorrichtung kann so bei beengten räumlichen Verhältnissen einfach verfahren und z. B. auch durch schmale Tore oder Einfahrten bewegt werden. Außerdem kann durch Verschwenken der Fräskettenanordnung in einem gewissen Bereich die Abwurfentfernung des Futters von der Vorrichtung variiert werden. Zwecks einfacher Gestaltung der Vorrichtung wird hierzu bevorzugt die untere Umlenkachse der Fräskettenanordnung zugleich als Schwenkachse und Antriebsachse verwendet. Die Verschwenkung kann z. B. über eine KolbenZylinder-Einheit oder eine andere geeignete Einrichtung, wie Zahnrad-Zahnstangen-Anordnung oder Trommel-Seil-Anordnung, bewirkt werden.

Für die Fräskettenanordnung ist vorzugsweise vorgesehen, daß diese aus zwei parallel endlos umlaufenden Ketten besteht, die über mehrere Querstege verbunden sind, wel che an ihrer Oberseite jeweils eine Anzahl von vorragenden Fräszähnen tragen und welche mit ihrer Unterseite über eine glatte Führungsfläche ablaufen. Diese Ausgestaltung ergibt eine sehr robuste und betriebssichere Bauweise der Fräskettenanordnung. Zugleich erfüllt diese Fräskettenanordnung die an sie gestellten Anforderungen, nämlich das Zerkleinern des Futtermittelblocks und das Austragen des Futtermittels besonders zuverlässig, ohne daß ein hoher technischer Aufwand nötig wäre, auch wenn schwieriges Silagegut, z. B. Grassilage, zu verarbeiten ist.

Weiter ist vorgesehen, daß der Behälterboden als den Futtermittelblock an die Fräskettenanordnung herandrückender Kratzboden mit einem Schrittantrieb ausgebildet ist. Hiermit wird zuverlässig dafür gesorgt, daß der im Behälter befindliche Futtermittelblock während des Betriebes der Vorrichtung, d. h. bei fortschreitender Zerkleinerung und Ausbringung des Blocks ,stets mit einer ausreichenden Kraft an die Fräskettenanordnung angedrückt wird. Außerdem wird so sichergestellt, daß das Futter vollständig ausgetragen wird und daß keine Futtermittelreste im Behalter verbleiben. Da der Fräsvorgang nur eine relativ geringe Vorschubgeschwindigkeit des Futtermittelblocks erfordert, ist zweckmäßig der den Kratzboden langsam fortbewegende Schrittantrieb vorgesehen.

Um die Vorrichtung möglichst universell einsetzen zu können, ist bevorzugt vorgesehen, daß diese an der geschlossenen Stirnseite des Behälters angeordnete Kupplungselemente zur Anbringung der Vorrichtung an der Dreipunkt-Kupplung eines Schleppers oder dergleichen landwirtschaftlichen Fahrzeuges aufweist. Die Vorrichtung benötigt damit in dieser Ausgestaltung kein eigenes Fahrgestell, was eine besonders einfache und platzsparende Konstruktion ermöglicht.

Um die Fräskettenanordnung(en) und den Kratzboden in Bewegung zu versetzen, ist vorgesehen, daß diese von einem im mittleren unteren Bereich der Vorrichtung angeordneten Zapfwellenanschluß aus über mindestens einen Kettentrieb, einen Riementrieb, einen Gelenkwellenstrang und/oder ein Kegelradgetriebe antreibbar sind. Eine alternative Ausführung sieht vor, daß die Fräskettenanordnung(en) und der Kratzboden von mindestens einem Hydraulikmotor antreibbar sind.

Zur Verringerung von Verletzungsgefahren und zur Konzentration des ausgebrachten Futtermittels auf einen begrenzten Ablagebereich seitlich der Vorrichtung ist zweckmäßig außenseitig an der Fräskettenanordnung im Abstand von dieser eine mit dieser verschwenkbare Abdeckung angeordnet. Diese Abdeckung kann z. B. starr sein und aus Blech oder Hartkunststoff gefertigt sein oder auch flexibel sein und aus einem entsprechenden Material, wie Gummi oder Weichkunststoff, bestehen.

Die als Ladeeinrichtung dienende Plattform der Vorrichtung ist vorzugsweise als unterseitig verstrebte Blechplatte oder als Zinkenrost ausgebildet und mittels wenigstens einer Kolben-Zylinder-Einheit verschwenkbar, die in Längsrichtung der Vorrichtung verlaufend unterhalb des Behälterbodens angeordnet ist. Die Plattform ist damit stabil und ermöglicht es zugleich, ohne großen Kraftaufwand unter einen Futtermittelblock gefahren zu werden. Durch ihre Anordnung unterhalb des Behälterbodens der Vorrichtung ist die Kolben-Zylinder-Einheit für die Plattform gut gegen äußere Einwirkungen geschützt, jedoch bei angehobener Vorrichtung für Wartungs- und Reparaturzwecke gut zugänglich.

Die Grundausführung der Vorrichtung ist für die Aufnahme von bereits ausgeschnittenen Futtermittelblöcken gedacht, da in vielen landwirtschaftlichen Betrieben bereits ein separater Siloblockschneider vorhanden ist. In einer erweiterten Ausführung der Vorrichtung ist vorgesehen, daß an der offenen Stirnseite des Behälters eine Schneidvorrichtung zum Ausschneiden eines Futtermittelblocks aus einem Futtermittelsilo angeordnet ist. Durch diese Erweiterung um eine an sich bekannte Schneideinrichtung kann die Vorrichtung auch noch zum Ausschneiden von Futtermittelblöcken aus Silos verwendet werden, wobei diese Ausführung speziell für Betriebe sinnvoll ist, in denen noch kein separater Siloblockschneider vorhanden ist.

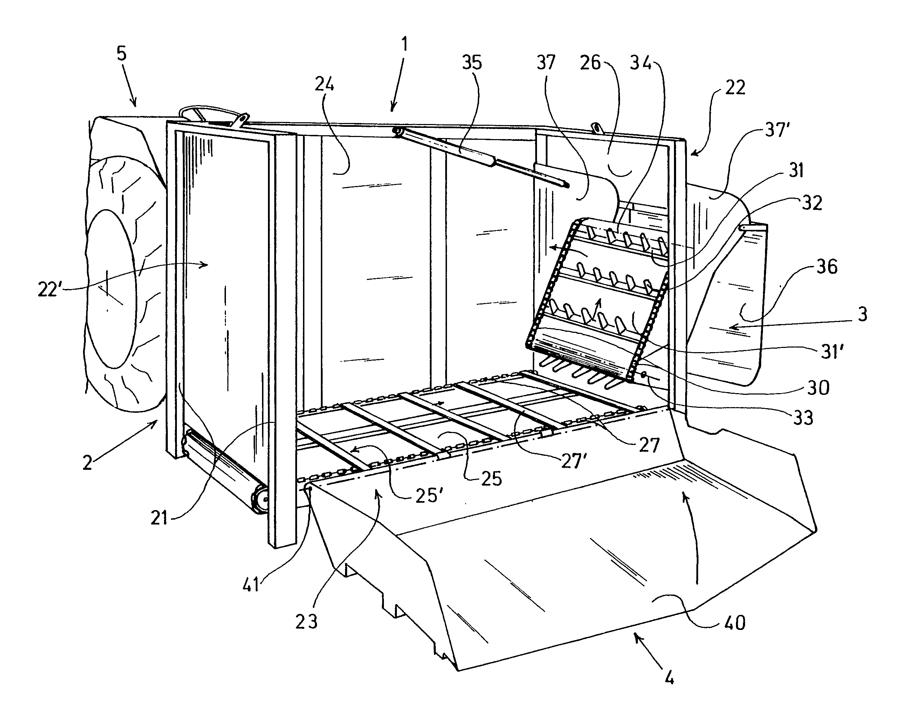

Im folgenden wird ein Ausführungsbeispiel der Vorrichtung anhand einer Zeichnung beschrieben. Die einzige Figur der Zeichnung zeigt eine Vorrichtung in perspektivischer Ansicht auf deren offene rückwärtige Stirnseite mit abgesenkter Plattform.

Wie aus der Figur ersichtlich ist, besteht die Vorrichtung 1 im wesentlichen aus einem Behälter 2, der einen annähernd quaderförmigen Raum umgrenzt. Der Behälter 2 besteht aus einem Rahmen 21 aus Vierkant- und Winkelprofilen sowie aus einer Lochgitterwand an der geschlossenen vorderen Stirnseite 24, einer Blechwand an der geschlossenen linken Seitenfläche 22' und einem Boden 25. Dabei ist der Boden 25 als Kratzboden 25' ausgebildet, der aus zwei quer zur Längsrichtung der Vorrichtung 1 in horizontaler Richtung umlaufenden Ketten 27 mit zwischen diesen angeordneten, quer verlaufenden, den Boden 25 überstreichenden Kratzleisten 27 besteht.

An der rechten Behälterseite 22, die nicht durch ein Blech oder dergleichen verschlossen ist, ist im vorliegenden Ausführungsbeispiel der Vorrichtung 1 eine Fräskettenanordnung 3 installiert. Diese Fräskettenanordnung 3 besteht aus zwei Achsen 33 und 34, die parallel zueinander in Längsrichtung der Vorrichtung 1 verlaufen. Zwei parallele, endlos umlaufende Ketten 30 sind unter Zwischenlage von auf den Achsen 33 und 34 gelagerten Kettenrädern um die beiden Achsen 33 und 34 geführt. Dabei dient die untere Achse 33 zugleich als Antriebsachse, die über einen nicht eigens dargestellten Antriebsmechanismus von einem die Vorrichtung 1 an seiner Dreipunkt-Kupplung tragenden Schlepper 5 aus antreibbar ist. Die obere Achse 34 dient lediglich als Umlenkachse. Die untere Achse 33 ist weiterhin als Schwenkachse für die gesamte Fräskettenanordnung 3 ausgebildet, d. h. die Fräskettenanordnung 3 ist mit ihrem oberen Ende um die im unteren Teil gelegene Achse 33 in einer vertikalen Schwenkebene verschwenkbar. Hierzu ist zwischen dem oberen Teil der Fräskettenanordnung 3 und der stirnseitigen Behälterwandung 24 eine Kolben-Zylinder-Einheit 35 angeordnet, mittels derer die Stellung der Fräskettenanordnung 3 relativ zum Behälter 2 veränderbar ist. In ihrer Arbeitsstellung, wie sie in der Figur gezeigt ist, verläuft die Fräskettenanordnung 3 schräg nach oben und außen, während in ihrer Ruhestellung die Fräskettenanordnung 3 im wesentlichen senkrecht steht. Hierdurch wird ein Durchfahren enger Einfahrten oder schmaler Tore erleichtert. Oberhalb der Fräskettenanordnung 3 ist im Behälter 2 eine Austragöffnung 26 freigelassen, durch welche zerkleinertes Futtermittel aus dem Behälter 2 mittels der Fräskettenanordnung 3 herausbefördert werden kann. Die Fräskettenanordnung weist hierzu außer den beiden Ketten 30 mehrere quer zwischen diesen verlaufende Querstege 31 auf, die mit ihrer Unterseite auf einer glatten Führungsfläche 31′ ablaufen. Die dem Inneren des Behälters 2 und damit einem darin befindlichen Futtermittelblock zugewandte Oberseite der Querstege 31 ist mit einer Anzahl von Fräszähnen 32 bestückt, die zur Zerkleinerung des Futtermittelblocks und zur Auflockerung und zum Weitertransport des Futters dienen. Während des Betriebes laufen die Ketten 30 mit den Querstegen 31 und den Fräszähnen 32 an der dem Inneren des Behälters 2 und dem darin befindlichen Futtermittelblock zugewandten Seite der Fräskettenanordnung 3 von unten nach oben. Das vom Futtermittelblock abgefräste Futter gelangt durch die Austragsöffnung 26 nach außen, wo es zwischen der Außenseite der Fräskettenanordnung 3 und einer außenseitig im Abstand von dieser angebrachten Abdeckung 36 frei nach unten auf den Stallgang oder in einen parallelen Futtertrog fällt. Um den Abwurf des Futters auf einen eng begrenzten Bereich neben der Vorrichtung 1 zu begrenzen, ist die Fräskettenanordnung 3 nach vorne und hinten durch Leitbleche 37 und 37′ begrenzt. Das Leitblech 37 dient im vorliegenden Ausführungsbeispiel der Vorrichtung 1 zugleich zur Aufnahme des Anlenkpunktes des der Fräskettenanordnung 3 zugewandten Endes der Kolben-Zylinder-Einheit 35.

Um einen im Inneren des Behälters 2 befindlichen Futtermittelblock stets mit einer ausreichenden Kraft an die Fräskettenanordnung 3 heranzudrücken, ist der Kratzboden 25′ des Behälterbodens 25 mit einem Schrittantrieb ausgestattet, welcher für einen stetigen, ausreichend großen Nachschub und Andruck des Futtermittelblocks an die Fräskettenanordnung 3 sorgt.

Schließlich besitzt die Vorrichtung 1 gemäß dem dargestellten Ausführungsbeispiel noch eine als Blechplatte 40 ausgebildete Ladeplattform 4, die so flach ausgebildet ist, daß sie unter einen ausgeschnittenen Futtermittelblock gefahren werden kann. Nach dem Unterfahren des Futtermittelblocks kann die Ladeplattform 4 mittels einer unterhalb des Behälterbodens 25 angeordneten Kolben-Zylinder-Einheit aus ihrer flachen Aufnahmestellung in eine annähernd vertikale Stellung verschwenkt werden. Hierbei wird der Futtermittelblock in das Innere des Behälters 2 eingekippt und dadurch bereits vorgelockert. In ihrer nach oben verschwenkten Position verschließt die Ladeplattform 4 die in der Figur noch offene rückwärtige Stirnseite 23 des Behälters 2. Die Verschwenkung der Plattform 4 erfolgt um eine behälterbodennahe, in Querrichtung zur Vorrichtung 1 verlaufende Schwenkachse 41.

Außer wie in der vorliegenden Figur dargestellt, kann die Fräskettenanordnung 3 auch an der gegenüberliegenden Seite 22′ des Behälters 2 angeordnet sein oder es können zwei Fräskettenanordnungen 3, d. h. je eine Fräskettenanordnung an der linken und rechten Seite 22′ bzw. 22 des Behälters 2 angeordnet sein.

### Ansprüche

1. Vorrichtung zum Aufnehmen, Transportieren, Zerkleinern und Ausbringen von Futtermittelblöcken, insbesondere Silage, Biertreber und/oder Corn Cob Mix, mit einem an seiner einen Stirnseite offenen Behälter, mit einer Ladeeinrichtung zum Einladen eines Futtermittelblocks in den Behälter, mit am Behälterboden angeordneten, quer zur Längsrichtung der Vorrichtung laufenden Fördermitteln und mit Mitteln zum Zerkleinern und seitlichen Ausbringen des Futtermittelblocks, dadurch gekennzeichnet, daß die Ladeeinrichtung eine Plattform (4) ist, die um eine behälterbodennahe, horizontale, der offenen Stirnseite (23) benachbarte Achse (41) aus einer flachen, annähernd horizontalen Lage zum Unterfahren und Aufnehmen eines Futtermittelblocks mit diesem unter Einkippen des Blocks in den Behälter (2) in eine im wesentlichen vertikale, den Behälter (2) stirnseitig verschließende Lage sowie in umgekehrter Richtung verschwenkbar ist, und daß die Mittel zum Zerkleinern und Ausbringen aus mindestens einer seitlich am Behälter (2) angeordneten, schräg nach oben und außen verlaufenden Fräskettenanordnung (3) bestehen.

2. Vorrichtung nach Anspruch 1, dadurch gekennzeichnet, daß die Fräskettenanordnung (3) um eine in ihrem unteren Teil in Längsrichtung der Vorrichtung (1) verlaufende Achse (33) aus ihrer schräg nach oben und außen verlaufenden Arbeitsstellung in eine im wesentlichen vertikale Ruhestellung einschwenkbar ist.

3. Vorrichtung nach den Ansprüchen 1 und 2, dadurch gekennzeichnet, daß die Fräskettenanordnung (3) aus zwei parallel endlos umlaufenden Ketten (30) besteht, die über mehrere Querstege (31) verbunden sind, welche an ihrer Oberseite jeweils eine Anzahl von vorragenden Fräszähnen (32) tragen und welche mit ihrer Unterseite über eine glatte Führungsfläche (31') ablaufen.

4. Vorrichtung nach den Ansprüchen 1 bis 3, dadurch gekennzeichnet, daß der Behälterboden (25) als den Futtermittelblock an die Fräskettenanordnung (3) herandrückender Kratzboden (25') mit einem Schrittantrieb ausgebildet ist.

5. Vorrichtung nach den Ansprüchen 1 bis 4, gekennzeichnet durch an der geschlossenen Stirnseite (24) des Behälters (2) angeordnete Kupplungselemente zur Anbringung der Vorrichtung (1) an der Dreipunkt-Kupplung eines Schleppers (5) oder dergleichen landwirtschaftlichen Arbeitsfahrzeuges.

6. Vorrichtung nach den Ansprüchen 1 bis 5, dadurch gekennzeichnet, daß die Fräskettenanordnung(en) (3) und der Kratzboden (25') von einem im mittleren unteren Bereich der Vorrichtung (1) angeordneten Zapfwellenanschluß aus über mindestens einen Kettentrieb, einen Riementrieb, einen Gelenkwellenstrang und/oder ein Kegelradgetriebe antreibbar sind.

7. Vorrichtung nach den Ansprüchen 1 bis 5, dadurch gekennzeichnet, daß die Fräskettenanordnung(en) (3) und der Kratzboden (25') von mindestens einem Hydraulikmotor antreibbar sind.

8. Vorrichtung nach den Ansprüchen 1 bis 7, dadurch gekennzeichnet, daß außenseitig an der Fräskettenanordnung (3) im Abstand von dieser eine mit dieser verschwenkbare Abdeckung (36) angeordnet ist.

9. Vorrichtung nach den Ansprüchen 1 bis 8, dadurch gekennzeichnet, daß die Plattform (4) als unterseitig verstrebte Blechplatte (40) oder als Zinkenrost ausgebildet und mittels wenigstens einer Kolben-Zylinder-Einheit verschwenkbar ist, die in Längsrichtung der Vorrichtung (1) verlaufend unterhalb des Behälterbodens (25) angeordnet ist.

10. Vorrichtung nach den Ansprüchen 1 bis 9, dadurch gekennzeichnet, daß an der offenen Stirnseite (23) des Behälters (2) eine Schneidvorrichtung zum Ausschneiden eines Futtermittelblocks aus einem Futtermittelsilo angeordnet ist.

EP 0 318 723 A2